# EUROPÄISCHE PATENTANMELDUNG

(11) **EP 0 943 364 A2**
(43) Veröffentlichungstag der Anmeldung: **22.09.1999**
(21) Anmeldenummer: 98890300.1
(22) Anmeldetag: 15.10.1998
(51) Int. Cl.: B01D 24/12, B01D 24/40

(54) **Vorrichtung zur Aufbereitung einer Flüssigkeit, insbesondere zur Reinigung von Wasser**

(30) Priorität: 18.02.1998 AT 28698
(71) Anmelder: BWT AKTIENGESELLSCHAFT, 5310 Mondsee (AT)
(72) Erfinder: Fischer, Erich, 5282 Ranshofen (AT)
(74) Vertreter: Atzwanger, Richard, Dipl.-Ing. Patentanwalt

(57) **Zusammenfassung**

Vorrichtung zur Aufbereitung einer Flüssigkeit, insbesondere zur Reinigung von Wasser, mit einem Behälter (1), welcher in seinem oberen Bereich mit einer Zuleitung (22) für die Flüssigkeit und in seinem unteren Bereich mit einer Ableitung (24) für die aufbereitete Flüssigkeit ausgebildet ist und welcher oberhalb der Ableitung (24) mit einem Siebboden (3) od.dgl. versehen ist, auf welchem Materialschichten, insbesondere Schichten aus Filtermaterialien, wie gebrochene Kohle (31) und Filterkies (32, 33, 34), angeordnet sind. Dabei ist die Mündung (23) der Zuleitung (21, 22) mit einer Verteilereinrichtung (4) für die über die Zuleitung (21, 22) in den Innenraum des Behälters (1) einströmende Flüssigkeit ausgebildet.

## Beschreibung

Die gegenständliche Erfindung betrifft eine Vorrichtung zur Aufbereitung einer Flüssigkeit, insbesondere zur Reinigung von Wasser, mit einem Behälter, welcher in seinem oberen Bereich mit einer Zuleitung für die Flüssigkeit und in seinem unteren Bereich mit einer Ableitung für die aufbereitete Flüssigkeit ausgebildet ist und welcher oberhalb der Ableitung mit einem Siebboden od.dgl. ausgebildet ist, auf welchem Materialschichten, insbesondere Schichten aus Filtermaterialien, wie gebrochene Kohle und Filterkies, angeordnet sind.

Bei bekannten derartigen Vorrichtungen tritt bei der Aufbereitung einer Flüssigkeit, insbesondere der Filterung von Wasser, z.B. der Reinigung von aus einem Schwimmbecken abgeführtem Wasser, die Schwierigkeit auf, daß durch die Strömung der Flüssigkeit aus dem Zuleitungsrohr in die Materialschichten, insbesondere in die Filterschichten, im Bereich der sich dabei ausbildenden Strömungen Material abgetragen wird, wodurch sich in den Materialschichten in steigendem Ausmaß Strömungskanäle ausbilden. Hierdurch tritt der Effekt auf, daß die Flüssigkeit aufgrund des geringeren Strömungswiderstandes in steigendem Ausmaß durch diese Kanäle strömt, wogegen die verbleibenden Bereiche der Materialschichten von der Flüssigkeit in absinkendem Ausmaß durchsetzt werden. Hierdurch wird mit ansteigenden Betriebszeiten ein Absinken der Qualität der Aufbereitung der Flüssigkeit, insbesondere eine Verschlechterung in der Reinigung von verunreinigtem Wasser, verursacht.
Es wird hiezu darauf verwiesen, daß gemäß der einschlägigen Norm durch Unebenheiten in der Oberfläche von in Behältern befindlichen Filterschichten Werte von 5% des Durchmessers des Behälters nicht überschritten werden dürfen.

Der gegenständlichen Erfindung liegt somit die Aufgabe zugrunde, eine Vorrichtung zur Aufbereitung einer Flüssigkeit, insbesondere zur Reinigung von Wasser, zu schaffen, durch welche die den bekannten derartigen Vorrichtungen anhaftenden Nachteile vermieden werden. Dies wird erfindungsgemäß dadurch erzielt, daß die Mündung der Zuleitung mit einer Verteilereinrichtung für die über die Zuleitung in den Innenraum des Behälters einströmende Flüssigkeit ausgebildet ist.

Vorzugsweise befindet sich die Verteilereinrichtung in radialem Abstand von der Mündung der Zuleitung. Nach einer bevorzugten Ausführungsform ist die Mündung der Zuleitung von einem Rohrstück umgeben, welches mit Durchbrechungen ausgebildet ist. Vorzugsweise ist dabei das Rohrstück als zylindrisches Rohrstück ausgebildet, welches mit einer Vielzahl von Bohrungen versehen ist. Dabei kann der Durchmesser des Rohrstückes den doppelten bis dreifachen Durchmesser der Mündung der Zuleitung aufweisen.

Nach einer weiteren bevorzugten Ausführungsform ist im Bereich des oberen Endes der Verteilereinrichtung zudem eine Leiteinrichtung für die Flüssigkeit angeordnet. Insbesondere ist diese Leiteinrichtung als sich nach unten verjüngender kegelförmiger Leitkörper ausgebildet, welcher sich im oberen Ende der Verteilereinrichtung befindet.

Der Gegenstand der Erfindung ist nachstehend anhand eines in der Zeichnung dargestellten Ausführungsbeispieles näher erläutert. Es zeigen:
- Fig. 1: eine erfindungsgemäße Vorrichtung, in Vorderansicht sowie teilweise in vertikalem Schnitt, und,
- Fig 2: einen Teil dieser Vorrichtung, in gegenüber Fig. 1 vergrößerter Darstellung und gleichfalls in vertikalem Schnitt.

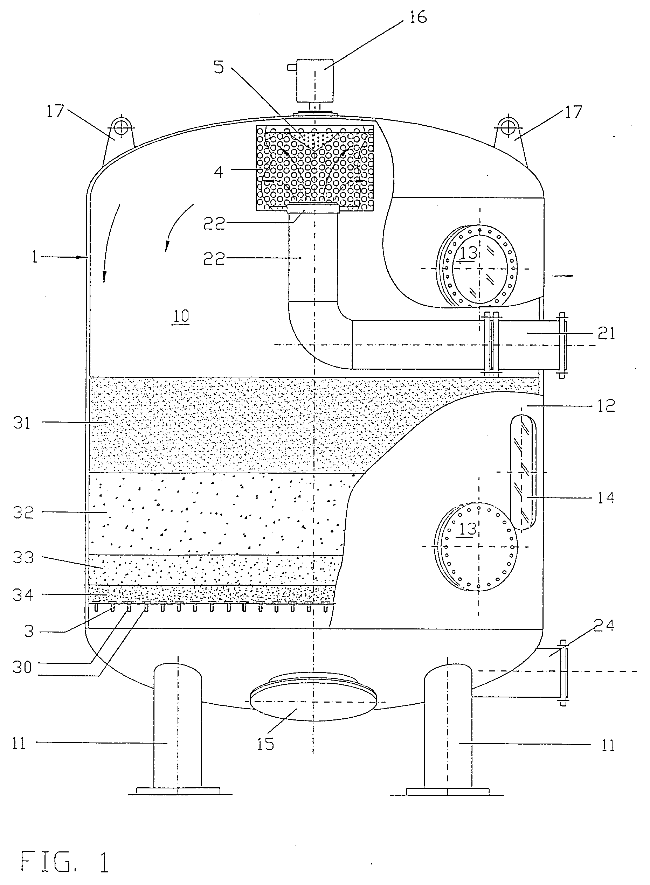

In Fig. 1 ist ein vertikal ausgerichteter zylindrischer Behälter 1 dargestellt, welcher von Stützen 11 getragen ist. Die Mantelfläche 12 dieses Behälters 1 ist mit mehreren durch Deckel 13 verschließbaren Öffnungen ausgebildet, durch welche hindurch dessen Innenraum, z.B. zur Inspektion, zur Reinigung, zur Wartung und zur Befüllung, zugänglich ist. Weiters ist der Mantel 12 des Behälters 1 mit mindestens einem Schauglas 14 ausgebildet. Zudem befindet sich In der Bodenfläche des Behälters 1 eine Revisionsöffnung, welche durch einen Deckel 15 abgeschlossen ist. Zudem ist an der oberen Deckfläche eine Entlüftungseinrichtung 16 angeordnet. Schließlich ist die obere Deckfläche mit mindestens zwei Tragbügeln 17 ausgebildet.

Die Mantelfäche 12 ist im oberen Bereich des Behälters 1 mit einem ersten Rohrstutzen 21 für die Zuleitung einer Flüssigkeit und im unteren Bereich mit einem zweiten Rohrstutzen 24 für die Ableitung der Flüssigkeit ausgebildet. Im Innenraum des Behälters 1 befindet sich ein mit Durchbrechungen, insbesondere mit Bohrungen ausgebildeter, Siebboden 3, auf welchen mehrere Schichten von Materialien aufgebracht sind. In die Bohrungen des Siebbodens sind aus Kunststoff hergestellte Düsen 30 eingesetzt, welche mit Schlitzen in der Größenordnung von 0.2 mm ausgebildet sind. Die Schichten aus Materialien bestehen aus einer obersten Schichte 31 aus gebrochener Kohle, insbesondere aus Hydro-Anthrasit, einer Schichte Filterkies 32 und zwei Schichten 33 und 34 aus Stützkies mit unterschiedlichen Körnungen, welche jeweils untereinander angeordnet sind.

Im Innenraum des Behälters 1 ist an den Rohrstutzen 21 ein nach oben abgewinkeltes Rohrstück 22 angeflanscht, dessen oberes Ende mit der Mündung 23 sich nahe der oberen Deckfläche des Behälters 1 befindet.

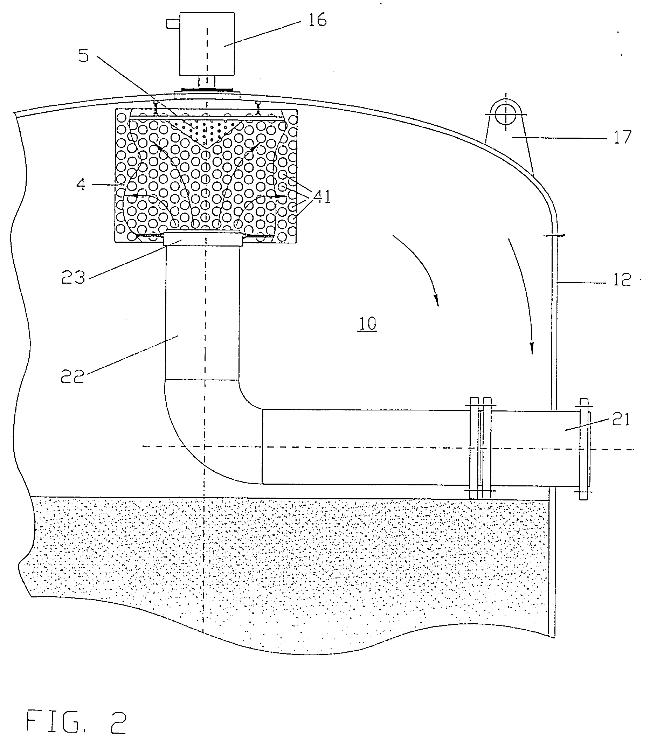

Wie dies insbesondere aus Fig. 2 ersichtlich ist, ist oberhalb der Mündung 23 ein kegelförmiger Leitkörper 5 angeordnet. Am oberen Ende des Rohrstückes 22 ist weiters ein zylindrisches Rohrstück 4 befestigt, welches sich über den kegelförmigen Leitkörper 5 und die Mündung 23 des Rohrstutzens 22 erstreckt und welcher mit einer Vielzahl von Durchbrechungen, z.B. mit Bohrungen 41, ausgebildet ist. Das Rohrstück 4 kann dabei den doppelten bis dreifachen Durchmesser des Rohrstückes 22 aufweisen.

Nach einem Ausführungsbeispiel ist das Rohrstück 4 aus einem Kunststoffmaterial oder aus einem Edelstahlblech gefertigt. Weiters beträgt der Anteil der Bohrungen 41 etwa 50% der gesamten Fläche des Rohrstückes 4 und weisen die Bohrungen 41 einen Durchmesser von 30 mm auf.

Die Wirkungsweise dieser Vorrichtung ist wie folgt:
Durch den Rohrstutzen 21 zugeführte Flüssigkeit, z.B. aus einem Schwimmbecken mittels einer Pumpe abgezogenes Wasser, welches aufbereitet, insbesondere gereinigt, werden soll, wird durch das Rohrstück 22 in den obersten Bereich des Innenraumes des Behälters 1 geleitet, wo es durch die angenähert horizontal ausgerichtete Mündung 23 dieses Rohrstückes 22 austritt und durch den kegelförmigen Leitkörper 5 in radialer Richtung umgeleitet wird. In weiterer Folge durchsetzt es die Durchbrechungen 41 des zylindrischen Rohrstutzens 4. Durch den Leitkörper 5 und durch das Rohrstück 4 erfolgt eine Aufteilung der Strömung in eine Vielzahl von Einzelströmungen, wodurch die aus dem Rohrstück 4 austretende Flüssigkeit angenähert gleichmäßig über den gesamten mit Flüssigkeit erfüllten oberen Bereich 10 des Innenraumes des Behälters 1 verteilt wird und die Schichten 31, 32, 33 und 34 durchsetzt. Die aufbereitete Flüssigkeit strömt durch den unteren Rohrstutzen 24 ab.

Hierdurch wird gewährleistet, daß die Flüssigkeit über die gesamte Oberfläche der obersten Materialschicht 31 in diese gleichmäßig verteilt eintritt, wodurch sich in den Materialschichten 31, 32, 33 und 34 keine Strömungskanäle ausbilden. Hierdurch erfolgt die angestrebte Aufbereitung der Flüssigkeit wesentlich länger, als dies bei bekannten Vorrichtungen der Fall ist.

## Patentansprüche

1. Vorrichtung zur Aufbereitung einer Flüssigkeit, insbesondere zur Reinigung von Wasser, mit einem Behälter (1), welcher in seinem oberen Bereich mit einer Zuleitung (22) für die Flüssigkeit und in seinem unteren Bereich mit einer Ableitung (24) für die aufbereitete Flüssigkeit ausgebildet ist und welcher oberhalb der Ableitung (24) mit einem Siebboden (3) od.dgl. versehen ist, auf welchem Materialschichten, insbesondere Schichten aus Filtermaterialien, wie gebrochene Kohle (31) und Filterkies (32, 33, 34), angeordnet sind, dadurch gekennzeichnet, daß die Mündung (23) der Zuleitung (21, 22) mit einer Verteilereinrichtung (4) für die über die Zuleitung (21, 22) in den Innenraum des Behälters (1) einströmende Flüssigkeit ausgebildet ist.

2. Vorrichtung nach Patentanspruch 1, dadurch gekennzeichnet, daß sich die Verteilereinrichtung (4) im radialen Abstand von der Mündung (23) der Zuleitung (22) befindet.

3. Vorrichtung nach einem der Patentansprüche 1 und 2, dadurch gekennzeichnet, daß der Mündung (23) der Zuleitung (22) ein Rohrstück (4) zugeordnet ist, welches mit Durchbrechungen (41) ausgebildet ist.

4. Vorrichtung nach einem der Patentansprüche 1 bis 3, dadurch gekennzeichnet, daß das Rohrstück als zylindrisches Rohrstück (4) ausgebildet ist, welcher mit einer Vielzahl von Durchbrechungen, insbesondere von Bohrungen (41), ausgebildet ist, deren Anteil vorzugsweise 50% der gesamten Fläche des Rohrstückes (4) beträgt.

5. Vorrichtung nach einem der Patentansprüche 1 bis 4, dadurch gekennzeichnet, daß der Durchmesser des Rohrstückes (4) den doppelten bis dreifachen Durchmesser der Zuleitung (22) aufweist.

6. Vorrichtung nach einem der Patentansprüche 1 bis 5, dadurch gekennzeichnet, daß am oberen Ende der Verteilereinrichtung (4) eine Leiteinrichtung (5) angeordnet ist.

7. Vorrichtung nach Patentanspruch 6, dadurch gekennzeichnet, daß die Leiteinrichtung als sich nach unten verjüngender, kegelförmiger Körper (5) ausgebildet ist, welcher sich im oberen Ende der Verteilereinrichtung (4) befindet.

8. Vorrichtung nach Patentanspruch 7, dadurch gekennzeichnet, daß sichder kegelförmige Leitkörper (5) im oberen Bereich des mit Durchbrechungen (41) ausgebildeten, zylindrischen Rohrstückes (4) befindet.
